# EUROPEAN PATENT SPECIFICATION

(11) **EP 2 341 652 B1**
(45) Date of publication and mention of the grant of the patent: **17.08.2016**
(21) Application number: 10305009.2
(22) Date of filing: 05.01.2010
(51) Int. Cl.: H04L 1/00, H04L 1/06

(54) **RECEPTION OF A DIVERSITY-PROTECTED DATA FLOW IN A RADIO COMMUNICATION NETWORK**
EMPFANG VON DIVERSITÄTSGESCHÜTZTEN DATENFLÜSSEN IN EINEM FUNKKOMMUNIKATIONSNETZWERK
RÉCEPTION D'UN FLUX DE DONNÉES À DIVERSITÉ PROTÉGÉE DANS UN RÉSEAU DE COMMUNICATION RADIO

(43) Date of publication of application: 06.07.2011
(73) Proprietor: ALCATEL LUCENT, 92100 Boulogne-Billancourt (FR)
(72) Inventor: Marques, Stéphane, 78141, Velizy (FR); Lahrech, Ahmed, 78141, Velizy (FR); Perrault, Philippe, 78141, Velizy (FR)
(74) Representative: Berthier, Karine

(56) References cited:
- EP-A1- 1 235 378
- EP-A2- 1 045 543
- WO-A2-2009/022325
- US-A- 4 953 197

## Description

### Technical Field

The present invention generally relates to the field of radio communication networks. In particular, the present invention relates to the reception of a diversity-protected data flow at a reception stage of a node of a radio communication network.

### Background Art

In a radio communication network, the connection between two nodes of the network is implemented through a radio link carrying a data flow in the form of a radio signal between the two nodes.

During transmission, the radio signal may be subjected to attenuation or fading, typically due to multipath propagation. These phenomena lead to a degradation of the radio signal. This degradation may cause the receiving node not to correctly retrieve the data flow from the radio signal. This increases the bit error rate (BER) of the data flow, and accordingly it degrades the radio link quality.

In order to protect the data flow against the phenomena cited above, diversity techniques are known. A diversity technique typically provides for the transmission of two or more radio signals carrying the same data flow between two nodes of a radio communication network. In particular, according to the known frequency diversity technique, the data flow is carried by two radio signals having two radio carriers with different frequency. On the other hand, according to the know space diversity technique, the data flow is carried by two radio signals that are received at the receiving node by two different reception antennas installed at a suitable mutual distance.

According to both the frequency diversity technique and the space diversity technique, a node therefore receives two radio signals that carry the same data flow. At the node, both the radio signals are processed to retrieve the original data flow.

A known technique for retrieving the original data flow is the Radio Protection Switching (RPS) technique. A reception stage of a node configured to implement the RPS technique typically comprises two reception antennas, two radio interfaces, two demodulators and two FEC (Forward Error Correction) decoders. The two FEC decoders are connected to a frame aligner, a switch and a deframer. The reception stage also comprises an RPS decision module. When two radio signals carrying the same data flow are received by the two reception antennas, they are demodulated so as to obtain two data flows that are then FEC decoded and aligned. The RPS decision module is able to determine an information indicative of an average BER and/or of a mean square error of each of the two data flows and, according to such information, to drive the switch so as it forwards to the deframer (and then to further processing devices of the node) the data flow having the lower average BER and/or the lower mean square error.

EP 1 235 378 discloses a reception relay station. The reception relay station comprises a plurality of external reception units arranged at spatially different positions and an internal reception unit. Each reception section in the internal reception unit demodulates a signal received in the external reception unit and outputs a transport stream. At this time, each reception section sets an error indicator flag to 1 for a TS packet causing a transmission error which exceeds the error correction capability. A TS synthesizer section in the internal reception unit completely synchronizes a plurality of input transport streams by referencing synchronization bytes, PID, and CC values, and selects to output a TS packet having the error indicator flag not set to 1.

WO 2009/022325 discloses a method for communication that includes receiving first and second data frames over first and second communication links, respectively, the first and second data frames containing respective first and second replicas of data, which has been encoded with a Forward Error Correction (FEC) code. The FEC code in the received first and second data frames is decoded, and respective first and second soft quality ranks of the first and second data frames are computed based on the decoded FEC code. One of the first and second replicas of the data are selected based on the first and second soft quality ranks. The selected one of the first and second replicas of the data is provided as output.

### Summary of the invention

The inventors have noticed that the known RPS technique disadvantageously implies that, at any time, only one of the two data flows available at the output of the demodulators is exploited. Indeed, the switch selects only one of the two data flows (i.e. the one with the lower average BER and/or lower mean square error), whereas the other data flow is not exploited at all.

If, for example, the two data flows exhibit a same average BER (or mean square error), only one of them is processed. Disadvantageously, the presence of the other data flow is not giving any benefit for improving the quality of the data flow output by the switch.

Moreover, disadvantageously, exploiting a single data flow makes the processing of the other data flow upstream the switch (i.e. the processing performed by the radio interface, the demodulator and the FEC decoder) useless. The devices that perform that processing are thus used in an inefficient way.

Moreover, disadvantageously, the RPS technique is intrinsically slow, since the switch is software-driven by the RPS decision module. Therefore, according to such technique, the switch may disadvantageously react to variations of the average BER (or mean square error) of the two data flows with a significant delay. Thus, it may happen that, for example, the switch outputs a data flow that previously had a lower average BER (or mean square error) than the other data flow, but that currently has a higher average BER (or mean square error).

Moreover, disadvantageously, according to the RPS technique the switching between the two data flows is not performed according to the current error conditions of the two data flows. Indeed, when one or more errors occur in a data flow, the effect of such one or more errors on its average BER arises with a certain delay. In other words, the average BER is disadvantageously not capable of providing a real-time indication of the error conditions of the two data flows.

The inventors have noticed that the drawbacks cited above may be addressed using a reception stage comprising a phase aligner, a combiner, in turn connected to a demodulator, a FEC decoder and a deframer. The node receives the two radio signals, aligns their phases and combines them (for examples, it sums them) so as to obtain a single resulting radio signal. Downstream the combiner, the resulting radio signal is demodulated so as to obtain a data flow that is then decoded and further processed at the node.

Nevertheless, the inventors have noticed that the technique described above utilizing the combiner requires providing very complex interfaces between the components of the reception stage, since the components must be substantially "merged" so as to form a single operating unit. Also the algorithms according to which the components operate are very complex (the pre-detection phase alignment of the two signals is indeed a very complex operation). Therefore, this technique is disadvantageously complex and expensive.

Accordingly, the inventors have addressed the problem of providing a method for receiving a diversity-protected data flow at a reception stage of a node of a radio communication network, which overcomes the aforesaid drawbacks.

In particular, the inventors have addressed the problem of providing a method for receiving a diversity-protected data flow at a reception stage of a node of a radio communication network which is capable of exploiting both the received radio signals, which is faster that the known RPS technique, which is capable of reacting nearly simultaneously to possible errors and which is simple and substantially inexpensive to implement.

In the present description and in the claims, the expression "diversity-protected data flow" will designate a data flow transmitted by using a diversity technique, such as for instance the above cited frequency diversity technique and space diversity technique.

According to a first aspect, some embodiments of the present invention provide a method for receiving, at a reception stage of a node of a radio communication network, a diversity-protected data flow divided in data units coded according to a forward error correction code, the method comprising:
a) demodulating a first radio signal carrying the diversity-protected data flow thereby obtaining a first data flow and detecting and demodulating a second radio signal carrying the diversity-protected data flow thereby obtaining a second data flow;
b) decoding a first data unit of the first data flow and a corresponding second data unit of the second data flow, generating first decoding information indicative of a result of the decoding the first data unit, and generating second decoding information indicative of a result of the decoding the second data unit, the first decoding information comprising a parameter indicating a number of errors comprised in the first data unit before decoding and the second decoding information comprising a further parameter indicating a number of errors comprised in the second data unit before decoding; and
c) processing the first decoding information and the second decoding information and, based on a result of the processing, selecting one of the first data unit and the second data unit in order to obtain a retrieved data flow.
wherein, at step c), processing comprises:
- computing a first average of the parameter and previous parameters associated to previously received data units of the first data flow; and
- computing a second average of the further parameter and previous further parameters associated to previously received data units of the second data flow.

Preferably, the diversity-protected data flow is divided in data units coded according to a block forward error correction code.

Preferably, at step b):
- generating the first decoding information comprises generating an additional parameter indicating whether the first data unit comprises any error after decoding; and
- generating the second decoding information comprises generating a further additional parameter indicating whether the second data unit comprises any error after decoding.

Preferably,
- generating the parameter comprises setting the parameter to a predetermined maximum value equal to a error correction capability of the block forward error correction code, if one or more errors of the first data unit have not been corrected during the decoding; and
- generating the further parameter comprises setting the further parameter to the predetermined maximum value, if one or more errors of the second data unit have not been corrected during the decoding.

Preferably, step c) comprises:
- evaluating the additional parameter, and:
   - if the additional parameter indicates that the first data unit is not affected by any error, selecting the first data unit; and
   - if the additional parameter indicates that the first data unit is affected by one or more errors, evaluating the further additional parameter.

Preferably, step c) comprises:
- if the further additional parameter indicates that the second data unit is not affected by any error, selecting the second data unit; and
- if the further additional parameter indicates that the second data unit is affected by one or more errors, comparing the first average and the second average.

Preferably:
- if the first average is higher than the second average, selecting the second data unit; and
- if the first average is lower than the second average, selecting the first data unit.

Preferably, the diversity-protected data flow is divided in data units coded according to a convolutional forward error correction code.

Preferably, at step b):
- the generating the first decoding information comprises generating a first information indicative of a bit reliability of the first data unit; and
- the generating the second decoding information comprises generating a second information indicative of a bit reliability of the second data unit.

According to a second aspect, some embodiments of the present invention provide a reception stage for a node of a radio communication network configured to receive a diversity-protected data flow divided in data units coded according to a forward error correction code, the reception stage comprising:
- a first demodulator configured to demodulate a first radio signal carrying the diversity-protected data flow thereby obtaining a first data flow and a second demodulator configured to demodulate a second radio signal carrying the diversity-protected data flow thereby obtaining a second data flow;
- a first decoder configured to decode a first data unit of the first data flow and generate first decoding information indicative of a result of the decoding the first data unit, and a second decoder configured to decode a corresponding second data unit of the second data flow and generate second decoding information indicative of a result of the decoding the second data unit, the first decoding information comprising a parameter indicating a number of errors comprised in the first data unit before decoding and the second decoding information comprising a further parameter indicating a number of errors comprised in the second data unit before decoding; and
- a protection module comprising a switch and a control unit, the control, unit being configured to process the first decoding information and the second decoding information and, based on a result of the processing, to control the switch for selecting one of the first data unit and the second data unit in order to obtain a retrieved data flow, wherein the control unit is further configured to compute a first average of the parameter and previous parameters associated to previously received data units of the first data flow and to compute a second average of the further parameter and previous further parameters associated to previously received data units of the second data flow.

According to a third aspect, some embodiments of the present invention provide a node for a communication network comprising a reception stage as set forth above.

According to a fourth aspect, some embodiments of the present invention provide a communication network comprising a node as set forth above.

### Brief description of the drawings

Embodiments of the invention will be better understood by reading the following detailed description, given by way of example and not of limitation, to be read with reference to the accompanying drawings, wherein:
- Figure 1 shows a block diagram of an exemplary reception stage of a node of a radio communication network according to a preferred embodiment of the present invention;
- Figure 2 shows a flow chart illustrating the operation of the reception stage of Figure 1, according to a preferred embodiment of the present invention; and
- Figure 3 is a diagram showing the BER of a diversity-protected data flow received by the known RPS technique and by the method according to a preferred embodiment of the present invention, respectively.

### Detailed description of preferred embodiments of the invention

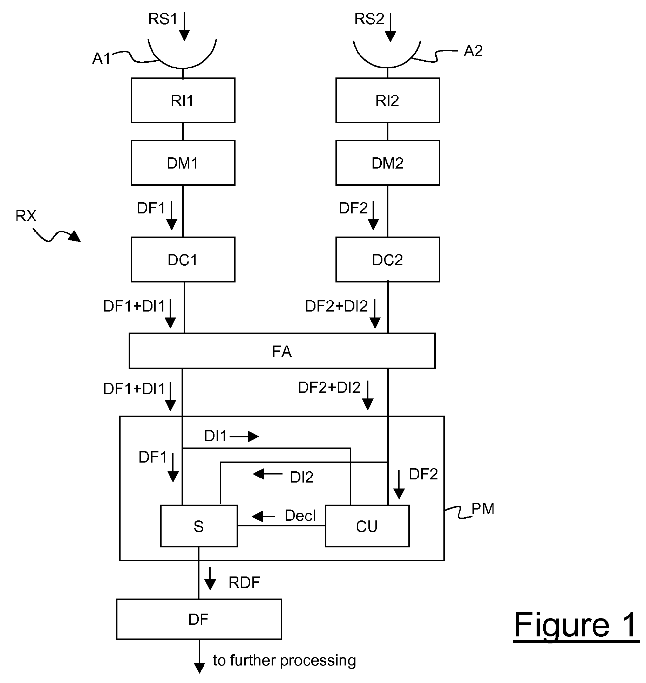

Figure 1 shows a block diagram of a reception stage RX of a node of a radio communication network, according to a preferred embodiment of the present invention.

The reception stage RX is preferably configured to implement a diversity technique, preferably a space diversity technique. The reception stage RX thus preferably comprises a first microwave antenna A1, a second microwave antenna A2, a first radio interface RI1, a second radio interface RI2, a first demodulator DM1, a second demodulator DM2, a first decoder DC1 and a second decoder DC2.

Preferably, the first decoder DC1 and the second decoder DC2 are FEC decoders. More preferably, the first decoder DC1 and the second decoder DC2 are configured to perform a FEC decoding by means of an error correction code such as a block code, like a Reed Solomon code, a BCH code, an LDPC code (Low Density Parity Check), or a convolutional code.

The reception stage RX further comprises a frame aligner FA, a protection module PM and a deframer DF.

The protection module PM preferably comprises a switch S and a control unit CU. The protection module PM is preferably a hardware module, more in particular an FPGA.

Preferably, the first microwave antenna A1, the first radio interface RI1, the first demodulator DM1 and the first decoder DC1 are connected in cascade. Likewise, the second microwave antenna A2, the second radio interface RI2, the second demodulator DM2 and the second decoder DC2 are connected in cascade. The first decoder DC1 and the second decoder DC2 are preferably connected to the frame aligner FA, which is in turn connected to the protection module PM. The protection module PM is finally connected to the deframer DF.

The reception stage RX can comprise other components that are not shown in Figure 1 and that will not be described herein after, since they are not relevant for the present description.

The operation of the reception stage RX and of its components mentioned above will be now described in detail, assuming that the reception stage RX receives, from a further node of the radio communication network (not shown in Figure 1), a first radio signal RS1 and a second radio signal RS2 which carry a same data flow.

It is assumed that the radio communication network is a packet-switched radio communication network. The first radio signal RS1 and the second radio signal RS2 are then divided into frames. Each frame is formatted according to the protocols implementing connectivity between the nodes of the radio communication network at layer 1 and layer 2 of the OSI model (e.g. Ethernet). Each frame preferably comprises a header and a payload.

It is further assumed that the data flow which is carried by the first radio signal RS1 and the second radio signal RS2 has been FEC coded at the node that generated the data flow by using a FEC code, e.g. a Reed Solomon code. Under this assumption, the first decoder DC1 and the second decoder DC2 of the reception stage RX are preferably configured to perform FEC decoding using the same FEC code, i.e. the same Reed Solomon code.

Under the above assumptions, the first microwave antenna A1 and the second microwave A2 preferably detect the first radio signal RS1 and the second radio signal RS2, respectively.

The first microwave antenna A1 preferably forwards the first radio signal RS1 to the first radio interface RI1, which in turn amplifies and filters the first radio signal RS1. The first radio interface RI1 then forwards the amplified and filtered first radio signal RS1 to the first demodulator DM1, which in turn demodulates the first radio signal RS1 thus obtaining a first data flow DF1. Then, the first demodulator DM1 preferably forwards such first data flow DF1 to the first decoder DC1. The first decoder DC1 preferably performs a FEC decoding of the first data flow DF1. Advantageously, such FEC decoding allows to correct possible errors inside the first data flow DF1. The number of correctable errors at the first decoder DC1 depends on the error correction capability of the FEC code used.

During the FEC decoding, the first decoder DC1 preferably generates first decoding information DI1 which are indicative of the result of the FEC decoding operation at the first decoder DC1 (for example, the number of corrected errors, possible presence of non-correctable errors, etc.).

Substantially in parallel to the above described operations, the second microwave antenna A2 forwards the second radio signal RS2 to the second radio interface RI2, which in turn amplifies and filters the second radio signal RS2. The second radio interface RI2 then forwards the amplified and filtered second radio signal RS2 to the second demodulator DM2, which in turn demodulates the second radio signal RS2 thus obtaining a second data flow DF2. Then, the second demodulator DM2 preferably forwards such second data flow DF2 to the second decoder DC2. The second decoder DC2 preferably performs a FEC decoding of the second data flow DF2. Advantageously, such decoding allows to correct possible errors inside the second data flow DF2. The number of correctable errors at the second decoder DC2 depends on the error correction capability of the FEC code used.

During the FEC decoding, the second decoder DC2 preferably generates second decoding information DI2 which are indicative of the result of the FEC decoding operation at the second decoder DC2 (for example, the number of corrected errors, possible presence of non-correctable errors, etc.).

The first and second decoders DC1 and DC2 then preferably forward the first decoded data flow DF1 and the second decoded data flow DF2, together with their respective first decoding information DI1 and second decoding information DI2, to the frame aligner FA. According to a first advantageous variant, the first decoding information DI1 and the second decoding information DI2 are embedded in the first decoded data flow DF1 and the second decoded data flow DF2, respectively, before transmission to the frame aligner FA. According to a second advantageous variant, the first decoding information DI1 and the second decoding information DI2 are transmitted to the frame aligner FA substantially in parallel to the first decoded data flow DF1 and the second decoded data flow DF2 on dedicated buses.

The frame aligner FA then preferably aligns frames of the first decoded data flow DF1 with corresponding frames of the second decoded data flow DF2. More in particular, the frame aligner FA preferably detects the starting point of each frame inside the first decoded data flow DF1 and the second decoded data flow DF2, and compensates for possible delays between corresponding frames by means of suitable delay circuits. The frame aligner FA then preferably sends the first aligned data flow DF1 and the second aligned data flow DF2, together with their respective first decoding information DI1 and second decoding information DI2, to the protection module PM.

The protection module PM preferably receives the first aligned data flow DF1 and the second aligned data flow DF2, together with their respective first decoding information DI1 and second decoding information DI2.

If the first decoding information DI1 and second decoding information DI2 are embedded in the first aligned data flow DF1 and the second aligned data flow DF2, respectively, the protection module PM preferably extracts the first decoding information DI1 and second decoding information DI2 from the first aligned data flow DF1 and the second aligned data flow DF2. The control unit CU preferably receives the first decoding information DI1 and the second decoding information DI2 while, substantially at the same time, the switch S receives the first aligned data flow DF1 and the second aligned data flow DF2.

If the first decoding information DI1 and second decoding information DI2 are transmitted on dedicated buses, no extraction is required.

The control unit CU preferably processes the first decoding information DI1 and the second decoding information DI2 and, according to them, generates a decision information Decl. Then, the control unit CU preferably sends this decision information Decl to the switch S.

The switch S, according to the decision information Decl received from the control unit CU, switches so as to output a retrieved data flow RDF which comprises data portions of the first data flow DF1 and/or data portions of the second data flow DF2, as it will be described in detail herein after.

The switch S preferably forwards the retrieved data flow RDF to the deframer DF. The deframer DF preferably receives from the switch S the retrieved data flow RDF and terminates the frames of this retrieved data flow RDF, i.e. it eliminates the header from the frames and extracts the data contained in their payload. The deframer DF then preferably forwards the retrieved data to other processing modules of the node, not shown in Figure 1.

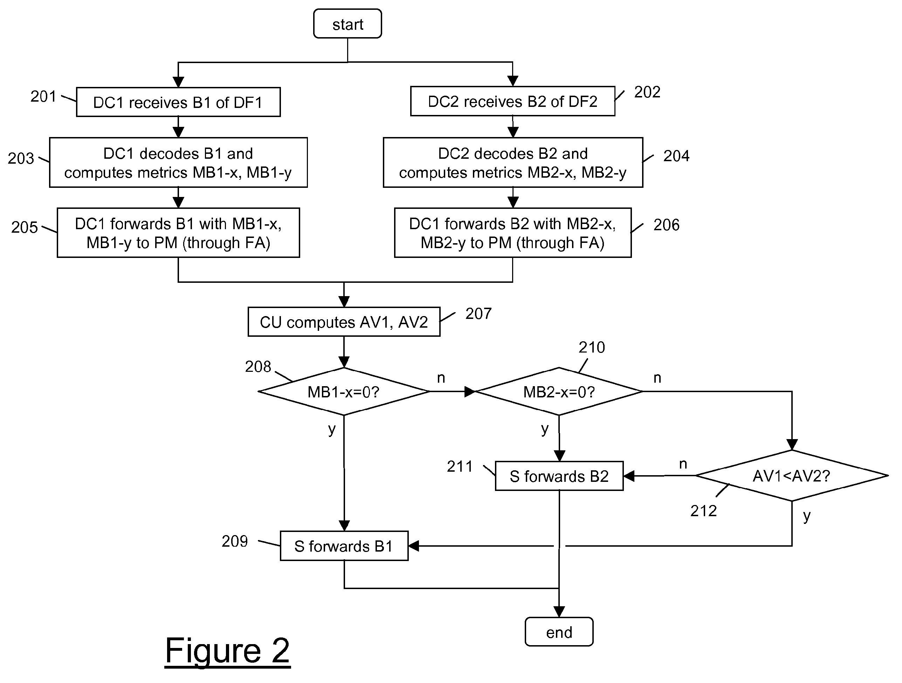

Figure 2 shows an exemplary flow chart illustrating in greater detail the operation of the first and second decoders DC1, DC2 and of the protection module PM, according to a preferred embodiment of the present invention.

As mentioned above, the data flow which is carried by the first radio signal RS1 and the second radio signal RS2 has been FEC coded at the node that generated the data flow by using a FEC code. As known, FEC coding provides for adding redundancies data to a data flow. In particular, FEC coding provides for dividing the data flow in data units, and coding each data unit (i.e. adding redundancy to each data unit). In case of FEC block codes, the data unit is a block of a predefined size. In case of FEC convolutional codes, the data unit may be a single bit or a bit stream of arbitrary length. The size of the data unit depends on the type of FEC code used. The size of the data unit is preferably selected so that each frame of the data flow comprises in its payload a predefined number of FEC-coded data units.

In view of the above, also the first data flow DF1 and the second data flow DF2 provided by the first demodulator DM1 and the second demodulator DM2 comprise first frames (each comprising the predefined number of first FEC-coded data units) and second frames (each comprising the predefined number of second FEC-coded data units), respectively.

At a step 201, the first decoder DC1 preferably receives from the first demodulator DM1 a first data unit B1 of the first data flow DF1. Substantially in parallel, at a step 202, the second decoder DC2 preferably receives from the second demodulator DM2 a second data unit B2 of the second data flow DF2. The first data unit B1 and the second data unit B2 are preferably corresponding data units, i.e. they comprise a same FEC-coded data portion of the original data flow.

Then, at a step 203, the first decoder DC1 decodes the first data unit B1 and generates the first decoding information DI1 which are indicative of the result of the FEC decoding performed on the first data unit B1. Preferably, the first decoding information DI1 comprise, if the FEC code is a block code:
- a first parameter MB1-x which indicates whether the first decoded data unit B1 does not contain any error, either because it did not contain errors before the FEC decoding, or because the errors have been corrected during the FEC decoding. For example, the first parameter MB1-x can be equal to 0 either if possible errors of the first data unit B1 have been corrected by the FEC decoding or if the first data unit B1 did not contain any error before FEC decoding, while it can be equal to 1 if possible errors of the first data unit B1 can not be corrected by FEC decoding (because the number of errors affecting the first data unit B1 exceeds the error correction capability of the block code); and
- a second parameter MB1-y which indicates the number of errors (i.e. the number of erroneous bytes or erroneous bits, depending on whether the block code is byte-based or bit-based) contained inside the first data unit B1 before the FEC decoding. Therefore, if the first data unit B1 did not contain any error before FEC decoding, the second parameter MB1-y is equal to 0; if possible errors inside first data unit B1 have been corrected during the FEC decoding, the second parameter MB1-y is equal to the number of corrected errors; if possible errors of the first data unit B1 have not been corrected during the FEC decoding (because the number of errors affecting the first data unit B1 exceeds the error correction capability of the block code), the second parameter MB1-y preferably assumes a predetermined maximum value, for example equal to the error correction capability of the block code (provided that the error correction capability is constant and does not vary according to the error position within the data unit).

The first parameter MB1-x and the second parameter MB1-y described above are just exemplary. Indeed, according to the FEC code applied, other first decoding information DI1 can be chosen which are indicative of the result of the FEC decoding.

Substantially in parallel, at a step 204, the second decoder DC2 decodes the second data unit B2 and generates the second decoding information DI2 which are indicative of the result of the FEC decoding performed on the second data unit B2. Preferably, also the second decoding information DI2 comprise a first parameter MB2-x and a second parameter MB2-y, whose meaning is identical to the meaning of the first and second parameters MB1-x and MB1-y described above.

At a step 205, the first decoder DC1 preferably forwards the first data unit B1 together with the first and second parameter MB1-x, MB1-y to the protection module PM through the frame aligner FA. According a first advantageous variant, the first and second parameter MB1-x, MB1-y are inserted in a data unit header or data unit tag appended to the first data unit B1. According to a second advantageous variant, the first and second parameter MB1-x, MB1-y are forwarded to the protection module PM parallel to the first data unit B1 on a dedicated bus.

Substantially in parallel, the second decoder DC2 preferably forwards the second data unit B2 together with the first and second parameters MB2-x, MB2-y to the protection module PM through the frame aligner FA. According to a first advantageous variant, the first and second parameter MB2-x, MB2-y are inserted in a data unit header or data unit tag appended to the second data unit B2. According to a second advantageous variant, the first and second parameter MB2-x, MB2-y are forwarded to the protection module PM parallel to the second data unit B2 on a dedicated bus.

The frame aligner FA preferably aligns the frames comprising the first data unit B1 and the second data unit B2, respectively. Therefore, downstream the frame aligner FA, the first data unit B1 and the second data unit B2 are aligned.

Then, the first data unit B1 and the second data unit B2, together with their respective first parameters MB1-x, MB2-x, and their respective second parameters MB1-y, MB2-y are received by the protection module PM. If the parameters MB1-x, MB1-y and the parameters MB2-x, MB2-y are inserted in a data unit header or data unit tag appended to the first data unit B1 and the second data unit B2, respectively, the protection module PM preferably extracts them from the first data unit B1 and the second data unit B2. The switch S preferably receives the first data unit B1 and the second data unit B2 whereas, substantially at the same time, the control unit CU preferably receives the first parameters MB1-x, MB2-x and the second parameters MB1-y, MB2-y.

If the first parameters MB1-x, MB2-x and the second parameters MB1-y, MB2-y are transmitted on dedicated buses, no extraction is required.

Then, during step 207, the control unit CU preferably computes a first average AV1 of the value of the second parameter MB1-y associated to the currently received first data unit B1 and the values of the second parameter MB1-y associated to previously received data units of the first data flow DF1. Likewise, during step 207, the control unit CU preferably computes a second average AV2 of the value of the second parameter MB2-y related to the second data unit B2 and the values of the second parameter MB2-y related to previously received data units of the second data flow DF2. Basically, the first average AV1 and the second average AV2 indicate an average estimate of the number of errors contained in the first data flow DF1 and in the second data flow DF2, respectively, before the FEC decoding. In other words, the first average AV1 and the second average AV2 are indicative of the quality of the first data flow DF1 and the second data flow DF2 as they are recovered by the first demodulator DM1 and the second demodulator DM2 starting from the first radio signal RS1 and the second radio signal RS2, respectively.

Then, the control unit CU preferably evaluates the first parameter MB1-x related to the first data unit B1 in order to assess whether the first decoded data unit B1 is erroneous (i.e. it contains one or more errors) (step 208).

If the control unit CU determines that the first decoded data unit B1 does not contain any error (i.e. MB1-x=0), then preferably the control unit CU sends to the switch S a decision information Decl which operates the switch S to select the first data unit B1 and to forward it to the deframer DF (step 209), thus discarding the second data unit B2.

On the other hand, if the control unit CU determines that the first decoded data unit B1 is erroneous (i.e. MB1-x=1), then the control unit CU preferably evaluates the first parameter MB2-x related to the second data unit B2 in order to assess whether the second decoded data unit B2 is also erroneous (step 210).

If the control unit CU determines that the second decoded data unit B2 does not contain any error (i.e. MB2-x=0), then preferably the control unit CU sends to the switch S a decision information Decl which operates the switch S to select the second data unit B2 and to forward it to the deframer DF (step 211), thus discarding the first data unit B1.

On the other hand, if the control unit CU determines that also the second decoded data unit B2 is erroneous (i.e. MB2-x=1), it preferably compares the values of the first average AV1 and the value of the second average AV2 (step 212).

If, during step 212, the control unit CU determines that the first average AV1 is lower than the second average AV2, the control unit CU determines that, although both the first data unit B1 and the second data unit B2 are erroneous, the average number of errors affecting the first data flow DF1 before the FEC decoding up to the current time is lower than the average number of errors affecting the second data flow DF2 before the FEC decoding up to the current time. Accordingly, the control unit CU preferably performs step 209 described above, i.e. the control unit CU sends to the switch S a decision information Decl which operates the switch S to select the first data unit B1 and to forward it to the deframer DF, thus discarding the second data unit B2.

On the contrary, if during step 212 the control unit CU determines that the first average AV1 is higher than the second average AV2, it preferably performs step 211 described above, i.e. the control unit CU sends to the switch S a decision information which operates the switch S to select the second data unit B2 and to forward it to the deframer DF, thus discarding the first data unit B1.

Therefore, advantageously, each time either step 209 or step 211 is performed, the switch S outputs the data unit belonging to the data flow that, up to the current time, shows the better quality, i.e. the data flow that, on the average, has been affected by the lower number of errors.

Preferably, steps 201-212 described above are repeated for each first data unit B1 and second data unit B2 received at the first and second decoders DC1, DC2, respectively. The sequence of the data units selected and output by the switch S each time either step 209 or step 211 is performed advantageously forms the retrieved data flow RDF.

Although the method according to the present invention has been described with reference to a FEC block code such as a Reed Solomon code, this choice is not limiting, since the method just described can be implemented by applying any FEC code. In case the FEC code is a convolutional code, the data units B1 and B2 comprise only a single bit. Indeed, when FEC decoding is performed using, for example, the Viterbi algorithm, decoding information are generated for each decoded bit. Thus, in case of convolutional codes, the decoding information, in this case, preferably comprise an information indicative of the bit reliability.

Advantageously, the method described above allows to obtain better performances with respect to the known RPS technique.

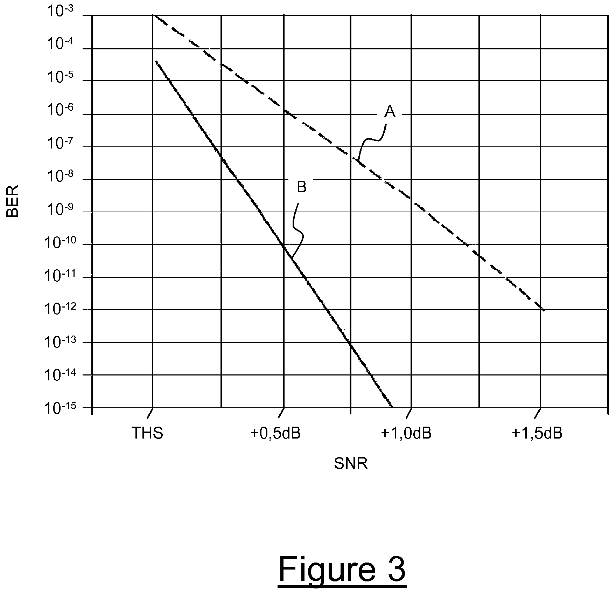

Figure 3 shows an exemplary diagram of two BER curves, as a function of the signal to noise ratio (SNR), of a diversity-protected data flow received by a reception stage implementing the known RPS technique and by the above described reception stage RX. In particular, curve A is the BER curve of a diversity-protected data flow received by a reception stage implementing the known RPS technique, while curve B is the BER curve of a diversity-protected data flow received by the reception stage RX. The data flow was coded by an 8K LDPC FEC code. From Figure 3, one can observe that the BER of the data flow received the reception stage RX is significantly lower than the BER of the data flow received by a reception stage implementing the known RPS technique, at least in a SNR range comprised between a minimum threshold THS corresponding to a BER (on curve A) equal to 10⁻³ and the value THS + 1.5 dB. For example, when the SNR is 0.5 dB higher than THS, the BER decreases from 10⁻⁶ (with a "normal" system) to 10⁻¹⁰ (with the described technique). Since the minimum acceptable BER in a communication link is usually 10⁻⁹, this reduction of the BER allows to obtain a link with good performances.

Moreover, advantageously, the method described above is simple and substantially inexpensive to implement. Indeed, modifying the reception stage of a network node supporting the RPS technique so that it supports the method described above advantageously is a simple operation that substantially does not involve any additional cost.

Furthermore, advantageously, the switching granularity of the method described above is finer with respect to the switching granularity of the known RPS technique. Indeed, while the switching according to the known RPS technique is performed on the basis of an average BER estimate or mean square error, the switching according to the method of the present invention is performed on the basis of the decoding information related to each data unit. In other words, once in a data unit period, two data units are received and decoded in parallel and the control unit determines which of the two data units is affected by the lower number of errors. The minimum switching period thus depends on the length of the data unit and on the bit rate. The shorter the code and the higher the bit rate, the finer is the switching granularity (i.e. the shorter the minimum switching period). In case of a convolution code, where each data unit comprises a single bit, the switching period is advantageously a single bit period.

The inventors have estimated that the minimum switching period that can be achieved by applying the method according to embodiments of the present invention is of the order of tens of micro seconds. Advantageously, this value is significantly lower than the minimum switching period achievable by the known RPS technique, which is of the order of milliseconds.

This implies, advantageously, that both the branches of the reception stage are exploited in a more efficient way. This in turn implies that an error appears in the retrieved data flow only if the same error appears simultaneously in the corresponding two data units which are processed in parallel at the reception stage. In this case, as described above, the reception stage evaluates the average of the number of errors inside the two data flows (step 212 of Figure 2) and selects the data unit belonging to the data flow exhibiting the smaller average value. Nevertheless, advantageously, the noise figures of the two branches of the reception stage are uncorrelated, and therefore the probability of appearing of such an error simultaneously in the two data units is very low.

## Claims

1. A method for receiving, at a reception stage (RX) of a node of a radio communication network, a diversity-protected data flow divided in data units coded according to a forward error correction code, said method comprising:
a) demodulating a first radio signal (RS1) carrying said diversity-protected data flow thereby obtaining a first data flow (DF1) and demodulating a second radio signal (RS2) carrying said diversity-protected data flow thereby obtaining a second data flow (DF2);
b) decoding a first data unit (B1) of said first data flow (DF1) and a corresponding second data unit (B2) of said second data flow (DF2), generating first decoding information (DI1) indicative of a result of said decoding said first data unit (B1), and generating second decoding information (DI2) indicative of a result of said decoding said second data unit (B2), said first decoding information (DI1) comprising a parameter indicating a number of errors comprised in said first data unit (B1) before decoding and said second decoding information (DI2) comprising a further parameter indicating a number of errors comprised in said second data unit (B1) before decoding; and
c) processing said first decoding information (DI1) and said second decoding information (DI2) and, based on a result of said processing, selecting one of said first data unit (B1) and said second data unit (B2) in order to obtain a retrieved data flow (RDF), **characterized in that**, at said step c), said processing comprises:
- computing a first average of said parameter and previous parameters associated to previously received data units of said first data flow (DF1); and
- computing a second average of said further parameter and previous further parameters associated to previously received data units of said second data flow (DF2).

2. The method according to claim 1, wherein said diversity-protected data flow is divided in data units coded according to a block forward error correction code.

3. The method according to claim 2, wherein at said step b):
- said generating said first decoding information (DI1) comprises generating an additional parameter indicating whether said first data unit (B1) comprises any error after decoding; and
- said generating said second decoding information (DI2) comprises generating a further additional parameter indicating whether said second data unit (B2) comprises any error after decoding.

4. The method according to claim 3, wherein
- said generating said parameter comprises setting said parameter to a predetermined maximum value equal to a error correction capability of said block forward error correction code, if one or more errors of the first data unit (B1) have not been corrected during said decoding; and
- said generating said further parameter comprises setting said further parameter to said predetermined maximum value, if one or more errors of the second data unit (B2) have not been corrected during said decoding.

5. The method according to claim 4, wherein said step c) comprises:
- evaluating said additional parameter, and:
- if said additional parameter indicates that said first data unit (B1) is not affected by any error, selecting said first data unit (B1); and
- if said additional parameter indicates that said first data unit (B1) is affected by one or more errors, evaluating said further additional parameter.

6. The method according to claim 5, wherein said step c) comprises:
- if said further additional parameter indicates that said second data unit (B2) is not affected by any error, selecting said second data unit (B2); and
- if said further additional parameter indicates that said second data unit (B2) is affected by one or more errors, comparing said first average and said second average.

7. The method according to claim 6, wherein:
- if said first average is higher than said second average, selecting said second data unit (B2); and
- if said first average is lower than said second average, selecting said first data unit (B1).

8. The method according to claim 1, wherein said diversity-protected data flow is divided in data units coded according to a convolutional forward error correction code.

9. The method according to claim 8, wherein at said step b):
- said generating said first decoding information (DI1) comprises generating a first information indicative of a bit reliability of said first data unit (B1); and
- said generating said second decoding information (DI2) comprises generating a second information indicative of a bit reliability of said second data unit (B2).

10. A node (RX) for a radio communication network, said node (RX) being configured to receive a diversity-protected data flow divided in data units coded according to a forward error correction code, said node (RX) comprising:
- a first demodulator (DM1) configured to demodulate a first radio signal (RS1) carrying said diversity-protected data flow thereby obtaining a first data flow (DF1) and a second demodulator (DM2) configured to demodulate a second radio signal (RS2) carrying said diversity-protected data flow thereby obtaining a second data flow (DF2);
- a first decoder (DC1) configured to decode a first data unit (B1) of said first data flow (DF1) and generate first decoding information (DI1) indicative of a result of said decoding said first data unit (B1), and a second decoder (DC2) configured to decode a corresponding second data unit (B2) of said second data flow (DF2) and generate second decoding information (DI2) indicative of a result of said decoding said second data unit (B2), said first decoding information (DI1) comprising a parameter indicating a number of errors comprised in said first data unit (B1) before decoding and said second decoding information (DI2) comprising a further parameter indicating a number of errors comprised in said second data unit (B1) before decoding; and
- a protection module (PM) comprising a switch (S) and a control unit (CU), said control unit (CU) being configured to process said first decoding information (DI1) and said second decoding information (DI2) and, based on a result of said processing, to control said switch (S) for selecting one of said first data unit (B1) and said second data unit (B2) in order to obtain a retrieved data flow (RDF), **characterized in that** said control unit
(CU) is further configured to compute a first average of said parameter and previous parameters associated to previously received data units of said first data flow (DF1) and to compute a second average of said further parameter and previous further parameters associated to previously received data units of said second data flow (DF2).

11. A communication network comprising a node according to claim 10.

## Patentansprüche

1. Verfahren für den Empfang eines diversitätsgeschützten Datenflusses an der Empfangsstufe (RX) eines Knotens eines Funkkommunikationsnetzwerks, wobei der diversitätsgeschützte Datenfluss in Dateneinheiten unterteilt ist, die entsprechend einem Vorwärtsfehlerkorrekturcode codiert sind, wobei besagtes Verfahren umfasst:
a) das Demodulieren eines ersten Funksignals (Radio Signal, RS1), welches besagten diversitätsgeschützten Datenfluss trägt, dadurch einen ersten Datenfluss (DF1) erhaltend, und das Demodulieren eines zweiten Funksignals (RS2), welches besagten diversitätsgeschützten Datenfluss trägt, dadurch einen zweiten Datenfluss (DF2) erhaltend;
b) das Decodieren einer ersten Dateneinheit (B1) aus besagtem erstem Datenfluss (DF1) und einer entsprechenden zweiten Dateneinheit (B2) aus besagtem zweitem Datenfluss (DF2), eine erste Decodierungsinformation (DI1) generierend, die ein Ergebnis besagten Decodierens von besagter erster Dateneinheit (B1) indiziert, und eine zweite Decodierungsinformation (DI2) generieren, die ein Ergebnis besagten Decodierens von besagter zweiter Dateneinheit (B2) indiziert, wobei besagte erste Decodierungsinformation (DI1) einen Parameter umfasst, der eine Zahl von Fehlern indiziert, die vor dem Decodieren in besagter erster Dateneinheit (B1) enthalten sind, und wobei besagte zweite Decodierungsinformation (DI2) einen weiteren Parameter umfasst, der eine Zahl von Fehlern indiziert, die vor dem Decodieren in besagter zweiter Dateneinheit (B2) enthalten sind; und
c) das Prozessieren besagter erster Decodierungsinformation (DI1) und besagter zweiter Decodierungsinformation (DI2) sowie die auf der Grundlage des Ergebnisses besagten Prozessierens erfolgende Auswahl entweder der ersten Dateneinheit (B1) oder der zweiten Dateneinheit (B2), um einen abgerufenen Datenfluss (Retrieved Data Flow, RDF) zu erhalten, **dadurch gekennzeichnet, dass** besagtes Prozessieren in besagtem Schritt c) Folgendes umfasst:
- das Berechnen eines ersten Durchschnitts aus besagtem Parameter und vorhergehenden Parametern, die mit zuvor empfangenen Dateneinheiten aus besagtem erstem Datenfluss (DF1) assoziiert sind; und
- das Berechnen eines zweiten Durchschnitts aus besagtem weiterem Parameter und vorhergehenden weiteren Parametern, die mit zuvor empfangenen Dateneinheiten aus besagtem zweitem Datenfluss (DF2) assoziiert sind.

2. Das Verfahren nach Anspruch 1, wobei besagter diversitätsgeschützter Datenfluss in Dateneinheiten aufgeteilt ist, die gemäß einem Block-Code für die Vorwärtsfehlerkorrektur codiert sind.

3. Das Verfahren nach Anspruch 2, wobei in besagtem Schritt b):
- besagtes Generieren besagter erster Decodierungsinformation (DI1) das Generieren eines zusätzlichen Parameters umfasst, der indiziert, ob besagte erste Dateneinheit (B1) nach dem Decodieren irgendeinen Fehler enthält; und
- besagtes Generieren besagter zweiter Decodierungsinformation (DI2) das Generieren eines weiteren zusätzlichen Parametern umfasst, der indiziert, ob besagte zweite Dateneinheit (B2) nach dem Decodieren irgendeinen Fehler enthält.

4. Das Verfahren nach Anspruch 3, wobei
- besagtes Generieren besagten Parameters umfasst, besagten Parameter auf einen vordefinierten Maximalwert einzustellen, der einem Fehlerkorrekturpotential besagten Block-Codes für die Vorwärtsfehlerkorrektur entspricht, wenn einer oder mehrere Fehler der ersten Dateneinheit (B1) im Verlauf besagten Decodierens nicht korrigiert wurden; und
- besagtes Generieren besagten weiteren Parameters das Einstellen besagten weiteren Parameters auf besagten vordefinierten Maximalwert umfasst, wenn einer oder mehrere Fehler der zweiten Dateneinheit (B2) im Verlauf besagten Decodierens nicht korrigiert wurden.

5. Verfahren nach Anspruch 4, wobei der besagte Schritt c) umfasst:
- das Evaluieren besagten zusätzlichen Parameters, und:
- wenn besagter zusätzlicher Parameter indiziert, dass besagte erste Dateneinheit (B1) von keinem Fehler betroffen ist, die Auswahl besagter erster Dateneinheit (B1); und
- wenn besagter zusätzlicher Parameter indiziert, dass besagte erste Dateneinheit (B1) von einem Fehler oder mehreren betroffen ist, das Evaluieren besagten zusätzlichen Parameters.

6. Verfahren nach Anspruch 5, wobei der besagte Schritt c) umfasst:
- wenn besagter zusätzlicher Parameter indiziert, dass besagte zweite Dateneinheit (B2) von keinem Fehler betroffen ist, die Auswahl besagter zweiter Dateneinheit (B2); und
- wenn besagter zusätzlicher Parameter indiziert, dass besagte zweite Dateneinheit (B2) von einem Fehler oder mehreren betroffen ist, das Vergleichen besagten ersten Durchschnitts und besagten zweiten Durchschnitts.

7. Das Verfahren nach Anspruch 6, wobei:
- dann, wenn besagter erster Durchschnitt höher ist als besagter zweiter Durchschnitt, besagte zweite Dateneinheit (B2) ausgewählt wird; und
- dann, wenn besagter erster Durchschnitt niedriger ist als besagter zweiter Durchschnitt, besagte erste Dateneinheit (B1) ausgewählt wird.

8. Das Verfahren nach Anspruch 1, wobei besagter diversitätsgeschützter Datenfluss in Dateneinheiten aufgeteilt ist, die gemäß einem Faltungs-Code für die Vorwärtsfehlerkorrektur codiert sind.

9. Das Verfahren nach Anspruch 8, wobei in besagtem Schritt b):
- besagtes Generieren besagter erster Decodierungsinformation (DI1) das Generieren einer ersten Information umfasst, die indikativ ist für eine Bit-Zuverlässigkeit besagter erster Dateneinheit (B1); und
- besagtes Generieren besagter zweiter Decodierungsinformation (DI2) das Generieren einer zweiten Information umfasst, die indikativ ist für eine Bit-Zuverlässigkeit besagter zweiter Dateneinheit (B2).

10. Knoten (RX) für ein Funkkommunikationsnetzwerk, wobei besagter Knoten (RX) konfiguriert ist für den Empfang eines diversitätsgeschützten Datenflusses, der in Dateneinheiten unterteilt ist, die gemäß einem Vorwärtsfehlerkorrekturcode codiert sind, wobei besagter Knoten (RX) umfasst:
- einen ersten Demodulator (DM1) für das Demodulieren eines ersten Funksignals (Radio Signal, RS1), welches besagten diversitätsgeschützten Datenfluss trägt, dadurch einen ersten Datenfluss (DF1) erhaltend und einen zweiten Demodulator (DM2) für das Demodulieren eines zweiten Funksignals (RS2), welches besagten diversitätsgeschützten Datenfluss trägt, dadurch einen zweiten Datenfluss (DF2) erhaltend;
- einen ersten Decoder (DC1), der konfiguriert ist für das Decodieren einer ersten Dateneinheit (B1) aus besagtem erstem Datenfluss (DF1) und für das Generieren einer ersten Decodierungsinformation (DI1), die indikativ ist für ein Ergebnis besagten Decodierens besagter erster Dateneinheit (B1), und einen zweiten Decoder (DC2), der konfiguriert ist für das Decodieren einer zweiten Dateneinheit (B2) aus besagtem zweitem Datenfluss (DF2) und für das Generieren einer zweiten Decodierungsinformation (DI2), die ein Ergebnis besagten Decodierens von besagter zweiter Dateneinheit (B2) indiziert, wobei besagte erste Decodierungsinformation (DI1) einen Parameter umfasst, der eine Zahl von Fehlern indiziert, die vor dem Decodieren in besagter erster Dateneinheit (B1) enthalten sind, und wobei besagte zweite Decodierungsinformation (DI2) einen weiteren Parameter umfasst, der eine Zahl von Fehlern indiziert, die vor dem Decodieren in besagter zweiter Dateneinheit (B2) enthalten sind; und
- ein Schutzmodul (Protection Module, PM), das einen Schalter (Switch, S) und eine Kontrolleinheit (Control Unit, CU) umfasst, wobei besagte Kontrolleinheit (CU) konfiguriert ist für das Verarbeiten besagter erster Decodierungsinformation (DI1) und besagter zweiter Decodierungsinformation (DI2) sowie dafür, um auf der Grundlage eines Ergebnisses besagten Verarbeitens besagten Schalter (S) zu steuern, damit er entweder besagte erste Dateneinheit (B1) oder besagte zweite Dateneinheit (B2) auswählt, um einen abgerufenen Datenfluss (RDF) zu erhalten, **dadurch gekennzeichnet, dass** besagte Steuereinheit (CU) weiterhin ausgelegt ist für das Berechnen eines ersten ersten Durchschnitts aus besagtem Parameter und vorhergehenden Parametern, die mit zuvor empfangenen Dateneinheiten aus besagtem erstem Datenfluss (DF1) assoziiert sind, sowie für das Berechnen eines zweiten Durchschnitts aus besagtem weiterem Parameter und vorhergehenden weiteren Parametern, die mit zuvor empfangenen Dateneinheiten aus besagtem zweitem Datenfluss (DF2) assoziiert sind.

11. Kommunikationsnetzwerk, einen Knoten gemäß Anspruch 10 umfassend.

## Revendications

1. Procédé pour recevoir, à une étape de réception (RX) d'un noeud d'un réseau de radiocommunication, un flux de données à diversité protégée divisé en unités de données codées selon un code de correction d'erreurs sans voie de retour, ledit procédé comprenant les étapes suivantes :
a) démoduler un premier signal radio (RS1) transportant ledit flux de données à diversité protégée obtenant ainsi un premier flux de données (DF1) et démoduler un deuxième signal radio (RS2) transportant ledit flux de données à diversité protégée obtenant ainsi un deuxième flux de données (DF2) ;
b) décoder une première unité de données (B1) dudit premier flux de données (DF1) et une deuxième unité de données (B2) correspondante dudit deuxième flux de données (DF2), générer des premières informations de décodage (DI1) indiquant un résultat dudit décodage de ladite première unité de données (B1), et générer des deuxièmes informations de décodage (DI2) indiquant un résultat dudit décodage de ladite deuxième unité de données (B2), lesdites premières informations de décodage (DI1) comprenant un paramètre indiquant un nombre d'erreurs contenues dans ladite première unité de données (B1) avant le décodage et lesdites deuxièmes informations de décodage (DI2) comprenant un autre paramètre indiquant un nombre d'erreurs contenues dans ladite deuxième unité de données (B2) avant le décodage ; et
c) traiter lesdites premières informations de décodage (DI1) et lesdites deuxièmes informations de décodage (DI2) et, sur la base d'un résultat dudit traitement, sélectionner ladite première unité de données (B1) ou ladite deuxième unité de données (B2) afin d'obtenir un flux de données récupéré (RDF),
**caractérisé en ce que**, à ladite étape c), ledit traitement comprend les étapes suivantes :
- calculer une première moyenne dudit paramètre et de paramètres précédents associés à des unités de données reçues précédemment dudit premier flux de données (DF1) ; et
- calculer une deuxième moyenne dudit autre paramètre et d'autres paramètres précédents associés à des unités de données reçues précédemment dudit deuxième flux de données (DF2).

2. Procédé selon la revendication 1, dans lequel ledit flux de données à diversité protégée est divisé en unités de données codées selon un code de correction d'erreurs sans voie de retour de blocs.

3. Procédé selon la revendication 2, dans lequel à ladite étape b) :
- ladite génération desdites premières informations de décodage (DI1) comprend la génération d'un paramètre supplémentaire indiquant si ladite première unité de données (B1) comprend une quelconque erreur après le décodage ; et
- ladite génération desdites deuxièmes informations de décodage (DI2) comprend la génération d'un autre paramètre supplémentaire indiquant si ladite deuxième unité de données (B2) comprend une quelconque erreur après le décodage.

4. Procédé selon la revendication 3, dans lequel
- ladite génération dudit paramètre comprend le réglage dudit paramètre sur une valeur maximale prédéterminée égale à une capacité de correction d'erreurs dudit code de correction d'erreurs sans voie de retour de blocs, si une ou plusieurs erreurs de la première unité de données (B1) n'ont pas été corrigées durant ledit décodage ; et
- ladite génération dudit autre paramètre comprend le réglage dudit autre paramètre sur ladite valeur maximale prédéterminée, si une ou plusieurs erreurs de la deuxième unité de données (B2) n'ont pas été corrigées durant ledit décodage.

5. Procédé selon la revendication 4, dans lequel ladite étape c) comprend les étapes suivantes :
- évaluer ledit paramètre supplémentaire, et :
- si ledit paramètre supplémentaire indique que ladite première unité de données (B1) n'est pas affectée par une quelconque erreur, sélectionner ladite première unité de données (B1) ; et
- si ledit paramètre supplémentaire indique que ladite première unité de données (B1) est affectée par une ou plusieurs erreurs, évaluer ledit autre paramètre supplémentaire.

6. Procédé selon la revendication 5, dans lequel ladite étape c) comprend les étapes suivantes :
- si ledit autre paramètre supplémentaire indique que ladite deuxième unité de données (B2) n'est pas affectée par une quelconque erreur, sélectionner ladite deuxième unité de données (B2) ; et
- si ledit autre paramètre supplémentaire indique que ladite deuxième unité de données (B2) est affectée par une ou plusieurs erreurs, comparer ladite première moyenne à ladite deuxième moyenne.

7. Procédé selon la revendication 6, dans lequel :
- si ladite première moyenne est supérieure à ladite deuxième moyenne, sélectionner ladite deuxième unité de données (B2) ; et
- si ladite première moyenne est inférieure à ladite deuxième moyenne, sélectionner ladite première unité de données (B1).

8. Procédé selon la revendication 1, dans lequel ledit flux de données à diversité protégée est divisé en unités de données codées selon un code de correction d'erreurs sans voie de retour convolutionnel.

9. Procédé selon la revendication 8, dans lequel à ladite étape b) :
- ladite génération desdites premières informations de décodage (DI1) comprend la génération de premières informations indiquant une fiabilité binaire de ladite première unité de données (B1) ; et
- ladite génération desdites deuxièmes informations de décodage (DI2) comprend la génération de deuxièmes informations indiquant une fiabilité binaire de ladite deuxième unité de données (B2).

10. Noeud (RX) pour un réseau de radiocommunication, ledit noeud (RX) étant configuré pour recevoir un flux de données à diversité protégée divisé en unités de données codées selon un code de correction d'erreurs sans voie de retour, ledit noeud (RX) comprenant :
- un premier démodulateur (DM1) configuré pour démoduler un premier signal radio (RS1) transportant ledit flux de données à diversité protégée obtenant ainsi un premier flux de données (DF1) et un deuxième démodulateur (DM2) configuré pour démoduler un deuxième signal radio (RS2) transportant ledit flux de données à diversité protégée obtenant ainsi un deuxième flux de données (DF2) ;
- un premier décodeur (DC1) configuré pour décoder une première unité de données (B1) dudit premier flux de données (DF1) et générer des premières informations de décodage (DI1) indiquant un résultat dudit décodage de ladite première unité de données (B1), et un deuxième décodeur (DC2) configuré pour décoder une deuxième unité de données (B2) correspondante dudit deuxième flux de données (DF2) et générer des deuxièmes informations de décodage (DI2) indiquant un résultat dudit décodage de ladite deuxième unité de données (B2), lesdites premières informations de décodage (DI1) comprenant un paramètre indiquant un nombre d'erreurs contenues dans ladite première unité de données (B1) avant le décodage et lesdites deuxièmes informations de décodage (DI2) comprenant un autre paramètre indiquant un nombre d'erreurs contenues dans ladite deuxième unité de données (B2) avant le décodage ; et
- un module de protection (PM) comprenant un commutateur (S) et une unité de commande (CU), ladite unité de commande (CU) étant configurée pour traiter lesdites premières informations de décodage (DI1) et lesdites deuxièmes informations de décodage (DI2) et, sur la base d'un résultat dudit traitement, pour commander ledit commutateur (S) pour sélectionner ladite première unité de données (B1) ou ladite deuxième unité de données (B2) afin d'obtenir un flux de données récupéré (RDF), **caractérisé en ce que** ladite unité de commande (CU) est en outre configurée pour calculer une première moyenne dudit paramètre et de paramètres précédents associés à des unités de données reçues précédemment dudit premier flux de données (DF1) et pour calculer une deuxième moyenne dudit autre paramètre et d'autres paramètres précédents associés à des unités de données reçues précédemment dudit deuxième flux de données (DF2).

11. Réseau de communication comprenant un noeud selon la revendication 10.
